# EUROPEAN PATENT APPLICATION

(11) **EP 2 660 837 A1**
(43) Date of publication of application: **06.11.2013**
(21) Application number: 10861262.3
(22) Date of filing: 30.12.2010
(51) Int. Cl.: H01G 9/055

(54) **MANUFACTURING METHOD FOR ANODE FOIL OF ALUMINUM ELECTROLYTIC CAPACITOR**

(71) Applicant: Xinjiang Joinworld Co. Ltd., Urumqi, Xinjiang 830013 (CN)
(72) Inventor: HONG, Tao, Xinjiang 830013 (CN); DONG, Xiaohong, Xinjiang 830013 (CN); WANG, Landong, Xinjiang 830013 (CN)
(74) Representative: Neumann, Ditmar
(86) International application number: PCT/CN2010/080547
(87) International publication number: WO 2012/088700

(57) **Abstract**

A manufacturing method of an anode foil for an aluminum electrolytic capacitor is provided, which comprises a first step of forming a porous oxide film, i.e. subjecting an etched foil having etched holes thereon to an anodic oxidation process to form a porous oxide film on both the outer surface of the etched foil and the inner surface of etched holes, and a second step of forming a dense oxide film, i.e. converting the porous oxide film into the dense oxide film. The method can be used to manufacture an anode foil for various voltage ranges, e.g. an ultra-high voltage anode foil whose voltage is more than 800 vf, and the method can increase specific capacity, reduce power consumption, simplify the process, and increase production efficiency.

## Description

### Technical Field

The invention relates to a technical field of the manufacture of electrolytic capacitor, and specifically relates to a method of manufacturing an anode foil for aluminum electrolytic capacitor.

### Background

In the technical field of anode foil for aluminum electrolytic capacitor, the property of the aluminum electrolytic capacitor depends on the properties of the corresponding anode foil such as withstanding voltage, specific capacity, etc. The withstanding voltage of an anode foil is determined by the dielectric property and thickness of a dielectric oxide film on the anode foil. The specific capacity of an anode foil is determined by an enlargement ratio of the surface area of an aluminum core layer covered by the dielectric oxide film of the anode foil, i.e., a specific surface area.

Aluminum oxide films can be divided into two types according to structures and properties: one type is dense oxide films, and the other type is porous oxide films. The dielectric oxide film on the aluminum foil used in an aluminum electrolytic capacitor is a kind of dense oxide films, which have a dense structure, an even thickness, and a good dielectric property. The porous oxide films consist of a barrier layer and a porous aluminum oxide layer. One side of the barrier layer connects with a metal aluminum layer and the porous aluminum oxide layer connects with the other side of the barrier layer. The barrier layer is thin and dense, while the porous layer is thick and porous, and has uniformly and regularly distributed pores. Since a good dielectric property is required, only the dense oxide film can be used as the dielectric oxide film on the anode foil for aluminum electrolytic capacitor, and the porous oxide film can not be used. When the dielectric constant is a certain value, the withstanding voltage of the dielectric oxide film is proportional to its thickness. Therefore, the withstanding voltage of the dielectric oxide film can be effectively increased by increasing the thickness of the dielectric oxide film. As a result, the anode foils capable of withstanding a high voltage can be obtained and thus can be used to make a high voltage aluminum electrolytic capacitor to meet the manufacturing requirements thereof.

Currently, in order to increase the thickness of the dielectric oxide film on the anode foil for aluminum electrolytic capacitor, a method of charging formation directly on an etched foil is generally used: i.e., during the formation procedure of the etched foil, when the current efficiency is kept at a certain level, continuously thickening the dielectric oxide film in the formation procedure to reach a desired withstanding voltage, by reducing the conductivity of the formation electrolytic solution, increasing the sparking voltage thereof and then increasing the formation voltage. The disadvantage of the method is that, when the conductivity of the formation electrolytic solution reduces, the ratio between the voltage on the electrolytic solution and the voltage on the dielectric oxide film is increased, and a large amount of electric energy is consumed on the heating of the formation electrolytic solution, the current efficiency of the formation procedure reduces rapidly, resulting in a higher power consumption. In particular, in the industrial production field of ultra-high anode foils withstanding a voltage of 800 Vf or more, it is difficult to obtain a current efficiency economically practical.

Another method of increasing the thickness of a dielectric oxide film on an anode foil for aluminum electrolytic capacitor is described in a Chinese patent publication CN 101104945A (hereinafter referred to as reference 1). It is intended to make a porous oxide film having a composite structure with thick barrier layer directly on an aluminum foil, wherein the aluminum foil is not subjected to an anneal and electrochemical polishing treatment. The specific surface area of the oxide film is high and can increase the electrostatic capacity and withstanding voltage. The method disclosed in reference 1 comprises the steps of: subjecting the aluminum foil without annealing and electrochemical polishing treatment to a first step of anodic oxidation by a constant voltage or a constant current in an acidic electrolytic solution containing water or ethylene glycol as a solvent, obtaining a porous aluminum oxide film; followed by a second step of anodic oxidation by a constant current in a neutral electrolytic solution containing water or ethylene glycol as a solvent, until the breakdown voltage is reached. The object of the invention of reference 1 is to "provide a method of manufacturing an anode aluminum oxide film with a thick barrier layer. The oxide film produced in the invention has both a porous layer and a barrier layer with a thickness of several hundred nanometers. And the oxide film has a high specific surface area, a thick barrier layer, a high electrostatic capacity and a high breakdown voltage."

However, it is proved that the method of reference 1 is not practical in theory and through experiments. There are severe technical errors in the method and thus will mislead the person skilled in the art. The errors include confusing the specific surface area of the porous film having a thick barrier layer with the specific surface area of the aluminum foil which has been subjected to a second step of oxidation. In fact, in reference 1, when the second step of oxidation ends, the specific surface area of the aluminum foil is actually still the specific surface area of the aluminum core layer beneath the barrier layer. Just because of this, the specific surface area of the porous film with thick barrier layer does not have an influence on the improvement of the electrostatic capacity. This has already been proved through theoretical analysis and by experiments: the specific surface area of the aluminum core layer beneath the barrier layer would not be substantially improved after the second oxidation of the reference 1. The specific capacity obtained is only slightly higher than that of a plain foil, and is very approximate to that of a plain foil. Therefore, the method of reference 1 can not be used to produce the desired anode foil for aluminum electrolytic capacitor with a large electrostatic capacity and a high breakdown voltage.

The method of reference 1 is not practical, and also causes obvious misleading to a person skilled in the art, because it teaches that "the pores in the porous oxide film with a thick barrier layer formed directly on the plain foil can be used as the etching holes of an etched foil for electrolytic capacitor, and can obtain a higher specific capacity," which will make the researchers in the relevant field misunderstand.

Typically, when the operation voltage of an aluminum electrolytic capacitor is 400 WV, the withstanding voltage of the formed foil in the electrolytic capacitor is normally between 500 vf and 600 vf, and when the operation voltage of the aluminum electrolytic capacitor is 700 WV, the withstanding voltage thereof is normally up to 1000 vf. In the current applications of the new energy field, such as wind power generation, photovoltaic power generation, etc., it is generally required for the aluminum electrolytic capacitor to withstand a high operation voltage of 700 WV. To reach such a high withstanding voltage, two capacitors in series connection or four capacitors in series-parallel connection are employed, wherein each of the capacitors has a rated voltage of 400 WV. The disadvantages of this employment are that: the elements of the capacitor occupy a large space and have a poor reliability, the device has a high failure rate and the cost of the electrolytic capacitor is increased by several times. As the rapid development of the new energy industry such as wind power generation, photovoltaic power generation, etc., an anode foil for aluminum electrolytic capacitor having a withstanding voltage of 1000 vf or more is needed.

It is very difficult for the conventional formation method to be used in ultra-high voltage formation of 800 vf or more. Generally, it is hard to obtain a sparking voltage of the electrolytic solution greater than 800 vf. Thus, the sparking is a problem to implement an ultra-high voltage formation of 800 vf or more. Even if there is an electrolytic solution with a sparking voltage greater than 800 vf, the current efficiency for the formation is low and the energy consumption costs are very high. Thus, it is almost impossible to implement a formation above 950 vf by a conventional formation method. Although experts and researchers in China repeatedly mention that the technical trend in the future resides in the development of an ultra-high voltage (950 vf) technique, there is no report about the technique and no success of research in China for the time being.

### Detailed Description

The power consumption cost of the conventional methods for formation in the prior art is very high, and the current efficiency rapidly decreases as the withstanding voltage increases. It is especially difficult to be used to carry out the formation of an ultra-high voltage anode foil. In addition, the method of reference 1 in the prior art is not correct and has misleading information.

Directed against the defects and misleading information in the prior art, the present invention provides a method of manufacturing an anode foil for aluminum electrolytic capacitor, which can be used to produce an anode foil for aluminum electrolytic capacitor with a low voltage (a withstanding voltage of 20 vf to 160 vf), a dielectric voltage (a withstanding voltage of 160 vf to 400 vf), a high voltage (a withstanding voltage of 400 vf to 800 vf) or an ultra-high voltage (a withstanding voltage of 800 vf to 1500 vf or more), respectively. Not only the anode foils having a high electrostatic capacity can be prepared, but also power consumption costs can be greatly reduced, thereby resulting in an improvement of the use efficiency and production efficiency of the electric energy. On the other hand, the invention provides a method of manufacturing an anode foil for an ultra-high voltage aluminum electrolytic capacitor of 800 vf or more. The method can effectively resolve the sparking problem at low cost.

Through lots of experimental studies, the inventors find a method of manufacturing an anode foil for aluminum electrolytic capacitor. Firstly, a porous film is formed on a surface of a high voltage etched foil (the surface includes both the outer surface of the etched foil and the inner surface of the etched holes) by an anodic oxidation method, wherein the high voltage etched foil has been subjected to an etching hole-enlarging treatment. Then, one-stage or multi-stage formation is preceded by making use of the conductivity of the porous film. After conventional optimizing treatments, anode foils for aluminum electrolytic capacitor are finally obtained, wherein the anode foils have different withstanding voltages, and can retain relatively high capacity.

The aim of the present invention can be achieved by a technical solution described below. The technical solution is a method of manufacturing an anode foil for aluminum electrolytic capacitor, which comprises the following steps:
A first step of forming a porous oxide film:
   An etched foil having etched holes thereon for aluminum electrolytic capacitor is subjected to an anodic oxidation process to form a porous oxide film on both the outer surface of the etched foil and the inner surface of the etched holes, the porous oxide film is controlled to have a thickness of 15 nm to 3000 nm, a pore diameter of 4 nm to 500 nm, and a pore pitch of 10 nm to 950 nm.

The aim of the first step is to form a porous oxide film on both the outer surface of the etched foil having etched holes thereon and the inner surface of the etched holes by a conventional anodic oxidation method. By taking advantages of professional knowledge and the properties of the devices to be employed, and in accordance with the specific capacity and withstanding voltage of the desired anode foil for aluminum electrolytic capacitor, a person skilled in the art can determine suitable means to control the anodic oxidation process in terms of the desired thickness, pore diameter and pore pitch of the porous oxide film.

In the first step of anodic oxidation process, the following aspects may be considered and determined:

The solute of the electrolytic solution can be selected from: inorganic acids, such as sulfuric acid, phosphoric acid, chromic acid and the like; organic acids, such as oxalic acid, glycolic acid, tartaric acid, malic acid, citric acid and the like; a mixture of two or more members among these acids, such as a mixture of two or three acids among phosphoric acid, oxalic acid, sulfuric acid and the like; a mixture of an acid and a salt, such as a mixture of phosphoric acid and ammonium hypophosphite and the like; as well as salts, such as ammonium dihydrogen phosphate and the like. Additives can also be added.

In order to achieve the desired pore diameter of the porous film, the solute of the electrolytic solution can be selected in accordance with its solubility for the oxide film.

The solvent of the electrolytic solution can be water or an organic solvent such as ethylene glycol and the like.

The concentration of the solute of the electrolytic solution by weight is between 0.5% and 30%, depending on the type of the solute and a ratio between different solutes.

The anodic oxidation process includes increasing the voltage to an oxidation voltage at a constant current, and then carrying out oxidation at a constant voltage between 3V and 85V. The voltage can be set depending on the type of the solute and the desired pore diameter of the porous film. The current value and the time for the oxidation at the constant voltage can be adjusted according to the specific capacity of the etched foil and the pore diameter of the etched holes. The temperature for the oxidation at the constant voltage can be a room temperature, and normally in the range between 5°C to 35°C. After the anodic oxidation, the etched foil can optionally be immersed into pure water having a temperature higher than 90°C for 2 mins to 30 mins.

A second step of forming a dense oxide film:

The etched foil obtained from the first step is placed into an electrolytic solution having a pH value of 3.5 to 7.5, a conductivity of 20 µS·cm to 2000 µS·cm, and a temperature of 60°C to 90°C, to perform a one-stage or multi-stage formation with a direct current at a current density of 2 mA/cm² to 50 mA/cm² and a voltage of 15 V to 1500 V, so as to obtain a formed foil. The formation time of each stage is in a range from 2 mins to 90 mins. The porous oxide film is converted to a dense oxide film. An anode foil for an aluminum electrolytic capacitor having a withstanding voltage of 15 vf to 1500 vf is obtained.

The aim of the second step is to convert the porous oxide film into a dense oxide film by the one-stage or multi-stage formation utilizing the conductivity of the porous film, so as to obtain an anode foil for aluminum electrolytic capacitor having the set withstanding voltage and the target specific capacity value.

The one-stage or multi-stage formation is a conventional formation method known in the art. The formation voltage of multi-stage formation is increased in a stagewise manner. It can be adjusted according to the specific condition. The electrolytic solution can be nearly neutral, such as an aqueous or organic solution of boric acid, adipic acid, sebacic acid and the ammonium salts thereof or a mixed solution of these solutes. Additives can also be added. The electrolytic solution has a pH value of 3.5 to 7.5, a conductivity of 20 µS·cm to 2000 µS·cm. The one-stage or multi-stage formation can be implemented at a formation temperature between 60°C to 90°C, a current density between 2 mA/cm² to 50 mA/cm², and a direct current voltage between 15 V to 1500 V. The formation voltage can be set according to the desired withstanding voltage and the stage levels of the formation to convert the porous oxide film into a dense oxide film, and obtain an anode foil for aluminum electrolytic capacitor with the desired withstanding voltage.

In order to improve the quality of the product, the method of the present invention can further comprise a third step of optimizing treatments, following up to the second step. In the third step, the formed foil obtained from the second step is optionally subjected to an acidization treatment and/or is optionally subjected to a thermal treatment, the formed foil is then subjected to a restoring formation for 2 mins to 50 mins under the same conditions as that in the last stage of the second step.

In order to further improve the quality of the product, in the additional third step of optimizing treatments, the formed foil is subjected to either an acidization treatment or a thermal treatment before the restoring formation. The acidization is performed by immersing the formed foil obtained from the second step into an acidic solution having a conductivity of 1000 µS·cm to 10000 µS·cm and a pH value of 1.2 to 3.0. The thermal treatment is performed at a temperature of 100°C to 570°C for a period of 1 min to 10 mins. As an alternative, the formed foil is subjected to both an acidization treatment and a thermal treatment, and generally the thermal treatment follows up to the acidization treatment.

For a better effect of saving power and improving product quality, it is preferable to ensure that the porous oxide film formed in the first step has a thickness of 190 nm to 2600 nm, a pore diameter of 15 nm to 300 nm, and a pore pitch of 30 nm to 600 nm. In the second step, the conductivity of the electrolytic solution is preferable between 20 µS·cm and 1500 µS·cm. In the third step, the pH value of the acidic solution used for acidization treatment is preferable in a range between 1.2 and 2.0.

In order to further improve the product quality, it is more preferable that the porous oxide film formed in the first step has a thickness of 500 nm to 2000 nm, a pore diameter of 25 nm to 200 nm, and a pore pitch of 50 nm to 400 nm. In the second step, the conductivity of the electrolytic solution is more preferable between 20 µS·cm and 1000 µS·cm. In the third step, after the acidization treatment, the formed foil is preferably subjected to a thermal treatment at a temperature of 100°C to 570°C for 1 min to 10 mins, then the formed foil is subjected to a restoring formation.

To obtain a better product quality, the temperature of the thermal treatment in the additional third step is preferable to be controlled within a range of 300°C to 500°C.

The present invention can successfully produce an anode foil for aluminum electrolytic capacitor. Since a porous oxide film with a certain thickness is firstly formed on an etched foil, and then a conventional formation of the porous film is performed, an anode foil for aluminum electrolytic capacitor having a good electrostatic capacity can be obtained. The obtained anode foils can meet various requirements on withstanding voltages of the aluminum electrolytic capacitors. Surprisingly, compared with the conventional formation method, the present method can save a power consumption of 5% to 60% depending on the different withstanding voltage of the product. Therefore, an obvious advantage of the present invention is that the power consumption can be greatly reduced.

The present invention also resolves the problems of sparking and unstable property of the oxide film during the manufacture of an ultra-high voltage dielectric film, and overcomes the defects and misleading teachings in the prior art. By the process of the invention, a formed foil having a withstanding voltage of 800 vf or more can be obtained. Moreover, the method of the invention is simple and easy to apply. The process for manufacturing a ultra-high voltage dielectric film is simple and can be easily carried out at room temperature or an elevated temperature.

In sum, the present invention has significant economical and social benefits, and especially satisfies the current demands for the energy saving, emission reduction and green environmental protection. The present invention is applicable to be developed and widely spread. Therefore, compared with the prior art, the present invention has substantive features and significant technical effects.

### Examples

The method of the present invention is further described with reference to the following examples, but the protection scope of the present invention is not limited thereto.

### Example 1

An anode foil for aluminum electrolytic capacitor with a withstanding voltage of 20 vf is produced. It can save about 5% of the power consumption as compared with the conventional formation method. The production of the anode foil comprises the steps of:
A first step of forming a porous oxide film:
   An etched foil having etched holes thereon for aluminum electrolytic capacitor is subjected to an anodic oxidation process to form a porous oxide film on both the outer surface of the etched foil and the inner surface of etched holes, the porous oxide film is controlled to have a thickness of 20 nm to 2500 nm, a pore diameter of 4 nm to 8 nm, and a pore pitch of 10 nm to 18 nm.
A second step of forming a dense oxide film:
   The etched foil obtained from the first step is placed into an electrolytic solution having a pH value of 6.0 to 7.5, a conductivity of 1500 µS·cm to 1700 µS·cm, and a temperature of 70°C to 80°C, and one-stage formation is performed with a direct current at a current density of 5 mA/cm² to 10 mA/cm² and a voltage of 20 V for a period of 35 mins. The porous oxide film is converted to a dense oxide film. An anode foil for an aluminum electrolytic capacitor having a withstanding voltage of 21 vf is obtained.

### Example 2

An anode foil for aluminum electrolytic capacitor with a withstanding voltage of 100 vf is produced. It can save about 10% of the power consumption as compared with the conventional formation method. The production of the anode foil comprises the steps of:
A first step of forming a porous oxide film:
   An etched foil having etched holes thereon for aluminum electrolytic capacitor is subjected to an anodic oxidation process to form a porous oxide film on both the outer surface of the etched foil and the inner surface of etched holes, the porous oxide film is controlled to have a thickness of 110 nm to 130 nm, a pore diameter of 20 nm to 30 nm, and a pore pitch of 42 nm to 60 nm.
A second step of forming a dense oxide film:
   The etched foil obtained from the first step is placed into an electrolytic solution having a pH value of 1.5 to 2.5, a conductivity of 1200 µS·cm to 1500 µS·cm, and a temperature of 75°C to 80°C, and one-stage formation is performed with a direct current at a current density of 5 mA/cm² to 10 mA/cm² and a voltage of 100 V for a period of 35 mins. The porous oxide film is converted to a dense oxide film. An anode foil for an aluminum electrolytic capacitor having a withstanding voltage of 105 vf is obtained.
A third step of optimizing treatments:
   The formed foil obtained from the second step is subjected to a restoring formation for 20 mins to 25 mins under the same conditions as that in the last stage of the second step.

### Example 3

An anode foil for aluminum electrolytic capacitor with a withstanding voltage of 250 vf is produced. It can save about 15% of the power consumption as compared with the conventional formation method. The production of the anode foil comprises the steps of:
A first step of forming a porous oxide film:
   An etched foil having etched holes thereon for aluminum electrolytic capacitor is subjected to an anodic oxidation process to form a porous oxide film on both the outer surface of the etched foil and the inner surface of etched holes, the porous oxide film is controlled to have a thickness of 300 nm to 330 nm, a pore diameter of 20 nm to 60 nm, and a pore pitch of 45 nm to 130 nm.
A second step of forming a dense oxide film:
   The etched foil obtained from the first step placed into an electrolytic solution having a pH value of 4.0 to 4.6, a conductivity of 60 µS·cm to 90 µS·cm, and a temperature of 80°C to 90°C, and two-stage formation is performed with a direct current at a current density of 3 mA/cm² to 8 mA/cm² for a period of 40 mins. The porous oxide film is converted to a dense oxide film. An anode foil for an aluminum electrolytic capacitor having a withstanding voltage of 260 vf is obtained.
A third step of optimizing treatments:
   The formed foil obtained from the second step is subjected to an acidization treatment in an acidic solution having a conductivity of 700 µS·cm to 1100 µS·cm and a pH value of 1.3 to 1.5, and the formed foil is then subjected to a restoring formation for 20 mins to 25 mins under the same conditions as that in the last stage of the second step.

### Example 4

An anode foil for aluminum electrolytic capacitor with a withstanding voltage of 400 vf is produced. It can save about 20% of the power consumption as compared with the conventional formation method. The production of the anode foil comprises the steps of:
A first step of forming a porous oxide film:
   An etched foil having etched holes thereon for aluminum electrolytic capacitor is subjected to an anodic oxidation process to form a porous oxide film on both the outer surface of the etched foil and the inner surface of etched holes, the porous oxide film is controlled to have a thickness of 450 nm to 500 nm, a pore diameter of 40 nm to 100 nm, and a pore pitch of 90 nm to 200 nm.
A second step of forming a dense oxide film:
   The etched foil obtained from the first step is placed into an electrolytic solution having a pH value of 4.1 to 4.5, a conductivity of 50 µS·cm to 80 µS·cm, and a temperature of 80°C to 90°C, and three-stage formation is performed with a direct current at a current density of 4 mA/cm² to 7 mA/cm² for a period of 50 mins. The porous oxide film is converted to a dense oxide film. An anode foil for an aluminum electrolytic capacitor having a withstanding voltage of 420 vf is obtained.
A third step of optimizing treatments:
   The formed foil obtained from the second step is subjected to a thermal treatment at a temperature of 100°C to 570°C for a time period of 1 min to 10 mins, then the formed foil is subjected to a restoring formation for 20 mins to 25 mins under the same conditions as that in the last stage of the second step.

### Example 5

An anode foil for aluminum electrolytic capacitor with a withstanding voltage of 600 vf is produced. It can save about 25% of the power consumption as compared with the conventional formation method. The production of the anode foil comprises the steps of:
A first step of forming a porous oxide film:
   An etched foil having etched holes thereon for aluminum electrolytic capacitor is subjected to an anodic oxidation process to form a porous oxide film on both the outer surface of the etched foil and the inner surface of etched holes, the porous oxide film is controlled to have a thickness of 680 nm to 780 nm, a pore diameter of 50 nm to 150 nm, and a pore pitch of 110 nm to 300 nm.
A second step of forming a dense oxide film:
   The etched foil obtained from the first step is placed into an electrolytic solution having a pH value of 4.9 to 5.6, a conductivity of 60 µS·cm to 100 µS·cm, and a temperature of 80°C to 90°C, and three-stage formation is performed with a direct current at a current density of 5 mA/cm² to 10 mA/cm² for a period of 35 mins. The porous oxide film is converted to a dense oxide film. An anode foil for an aluminum electrolytic capacitor having a withstanding voltage of 630 vf is obtained.

### Example 6

An anode foil for aluminum electrolytic capacitor with a withstanding voltage of 800 vf is produced without a sparking of the foil. It can save about 30% of the power consumption as compared with the conventional formation method. The production of the anode foil comprises the steps of: A first step of forming a porous oxide film:
An etched foil having etched holes thereon for aluminum electrolytic capacitor is subjected to an anodic oxidation process to form a porous oxide film on both the outer surface of the etched foil and the inner surface of etched holes, the porous oxide film is controlled to have a thickness of 900 nm to 1000 nm, a pore diameter of 80 nm to 200 nm, and a pore pitch of 170 nm to 420 nm.

A second step of forming a dense oxide film:
The etched foil obtained from the first step is placed into an electrolytic solution having a pH value of 4.8 to 6.3, a conductivity of 20 µS·cm to 80 µS·cm, and a temperature of 80°C to 90°C, and three-stage formation is performed with a direct current at a current density of 3 mA/cm² to 8 mA/cm² for a period of is 40 mins. The porous oxide film is converted to a dense oxide film. An anode foil for an aluminum electrolytic capacitor having a withstanding voltage of 810 vf is obtained.

A third step of optimizing treatments:
The formed foil obtained from the second step is immersed into an acidic solution having a conductivity of 6000 µS·cm to 8000 µS·cm and a pH value of 1.3 to 1.5, subsequently the formed foil is subjected to a thermal treatment at a temperature of 300°C to 550°C for a time period of 1 min to 10 mins, and then the formed foil is subjected to a restoring formation for 20 mins to 25 mins under the same conditions as that in the last stage of the second step.

### Example 7

An anode foil for aluminum electrolytic capacitor with a withstanding voltage of 1000 vf is produced without a sparking of the foil. It can save about 40% of the power consumption as compared with the conventional formation method. The production of the anode foil comprises the steps of: A first step of forming a porous oxide film:
An etched foil having etched holes thereon for aluminum electrolytic capacitor is subjected to an anodic oxidation process to form a porous oxide film on both the outer surface of the etched foil and the inner surface of etched holes, the porous oxide film is controlled to have a thickness of 1100 nm to 1300 nm, a pore diameter of 80 nm to 300 nm, and a pore pitch of 170 nm to 600 nm.

A second step of forming a dense oxide film:
The etched foil obtained from the first step is placed into an electrolytic solution having a pH value of 4.7 to 5.5, a conductivity of 30 µS·cm to 50 µS·cm, and a temperature of 80°C to 90°C, and three-stage formation is performed with a direct current at a current density of 3 mA/cm² to 10 mA/cm² for a period of 40 mins. The porous oxide film is converted to a dense oxide film. An anode foil for an aluminum electrolytic capacitor having a withstanding voltage of 1050 vf is obtained.

A third step of optimizing treatments:
The formed foil obtained from the second step is immersed into an acidic solution having a conductivity of 7000 µS·cm to 9000 µS·cm and a pH value of 1.2 to 1.4, and then the formed foil is subjected to a restoring formation for 20 mins to 25 mins under the same conditions as that in the last stage of the second step.

### Example 8

An anode foil for aluminum electrolytic capacitor with a withstanding voltage of 1200 vf is produced without a sparking of the foil. It can save about 50% of the power consumption comparing with the conventional formation method. The production of the anode foil comprises the steps of:
A first step of forming a porous oxide film:
   An etched foil having etched holes thereon for aluminum electrolytic capacitor is subjected to an anodic oxidation process to form a porous oxide film on both the outer surface of the etched foil and the inner surface of etched holes, the porous oxide film is controlled to have a thickness of 1500 nm to 1800 nm, a pore diameter of 100 nm to 400 nm, and a pore pitch of 200 nm to 800 nm.
A second step of forming a dense oxide film:
   The etched foil obtained from the first step is placed into an electrolytic solution having a pH value of 3.5 to 5.1, a conductivity of 40 µS·cm to 45 µS·cm, and a temperature of 80°C to 90°C, and three-stage formation is performed with a direct current at a current density of 4 mA/cm² to 5 mA/cm² for a period of 50 mins. The porous oxide film is converted to a dense oxide film. An anode foil for an aluminum electrolytic capacitor having a withstanding voltage of 1220 vf is obtained.
A third step of optimizing treatments:
   The formed foil obtained from the second step is immersed into an acidic solution having a conductivity of 1000 µS·cm to 1300 µS·cm and a pH value of 1.2 to 1.7, subsequently the formed foil is subjected to a thermal treatment at a temperature of 100°C to 570°C for a time period of 1 min to 10 mins, and then the formed foil is subjected to a restoring formation for 20 mins to 25 mins under the same conditions as that in the last stage of the second step.

### Example 9

An anode foil for aluminum electrolytic capacitor with a withstanding voltage of 1500 vf is produced without a sparking of the foil. It can save about 60% of the power consumption comparing with the conventional formation method. The production of the anode foil comprises the steps of: A first step of forming a porous oxide film:
An etched foil having etched holes thereon for aluminum electrolytic capacitor is subjected to an anodic oxidation process to form a porous oxide film on both the outer surface of the etched foil and the inner surface of etched holes, the porous oxide film is controlled to have a thickness of 1800 nm to 2000 nm, a pore diameter of 100 nm to 500 nm, and a pore pitch of 200 nm to 900 nm.

A second step of forming a dense oxide film:
The etched foil obtained from the first step is placed into an electrolytic solution having a pH value of 4.3 to 5.0, a conductivity of 30 µS·cm to 50 µS·cm, and a temperature of 80°C to 90°C, and three-stage formation is performed with a direct current at a current density of 4 mA/cm² to 7 mA/cm² for a period of 40 mins. The porous oxide film is converted to a dense oxide film. An anode foil for an aluminum electrolytic capacitor having a withstanding voltage of 1550 vf is obtained.

A third step of optimizing treatments:
The formed foil obtained from the second step is immersed into an acidic solution having a conductivity of 1200 µS·cm to 1800 µS·cm and a pH value of 1.3 to 1.6, subsequently the formed foil is subjected to a thermal treatment at a temperature of 300°C to 550°C for a time period of 1 min to 10 mins, and then the formed foil is subjected to a restoring formation for 20 mins to 25 mins under the same conditions as that in the last stage of the second step.

## Claims

1. A method of manufacturing an anode foil for an aluminum electrolytic capacitor, comprising the steps of:
a first step of forming a porous oxide film:
subjecting an etched foil having etched holes thereon for aluminum electrolytic capacitor, to an anodic oxidation process to form a porous oxide film on both the outer surface of the etched foil and the inner surface of etched holes, the porous oxide film being controlled to have a thickness of 15 nm to 3000 nm, a pore diameter of 4 nm to 500 nm, and a pore pitch of 10 nm to 950 nm; and
a second step of forming a dense oxide film:
placing the etched foil obtained from the first step into an electrolytic solution having a pH value of 3.5 to 7.5, a conductivity of 20 µS·cm to 2000 µS·cm, and a temperature of 60°C to 90°C, and performing one-stage or multi-stage formation with a direct current at a current density of 2 mA/cm² to 50 mA/cm² and a voltage of 15 V to 1500 V so as to obtain a formed foil, wherein the foramtion voltage of each stage is individually set according to a desired withstanding voltage of the respective stage, and the formation time of each stage is in a range from 2 mins to 90 mins.

2. The method of manufacturing an anode foil for aluminum electrolytic capacitor according to claim 1, further comprising a third step of optimizing treatments:
the formed foil obtained from the second step being optionally subjected to an acidization treatment and/or being optionally subjected to a thermal treatment, and then subjecting the formed foil to a restoring formation for 2 mins to 50 mins under the same conditions as that in the last stage of the second step.

3. The method of manufacturing an anode foil for aluminum electrolytic capacitor according to claim 2, wherein the acidization treatment in the third step of optimizing treatments is performed by immersing the formed foil obtained from the second step into an acidic solution having a conductivity of 1000 µS·cm to 10000 µS·cm and a pH value of 1.2 to 3.0.

4. The method of manufacturing an anode foil for aluminum electrolytic capacitor according to claim 3, wherein the acidic solution used for acidization treatment in the third step has a pH value of 1.2 to 2.0.

5. The method of manufacturing an anode foil for aluminum electrolytic capacitor according to claim 2, 3 or 4, wherein the thermal treatment in the third step of optimizing treatments is subjecting the formed foil to a thermal treatment at a temperature of 100°C to 570°C for a time period of 1 min to 10 mins.

6. The method of manufacturing an anode foil for aluminum electrolytic capacitor according to claim 5, wherein the thermal treatment is performed at a temperature of 300°C to 550°C.

7. The method of manufacturing an anode foil for aluminum electrolytic capacitor according to claim 1, 2 or 3, wherein the porous oxide film obtained from the first step has a thickness of 190 nm to 2600 nm, a pore diameter of 15 nm to 300 nm, and a pore pitch of 30 nm to 600 nm.

8. The method of manufacturing an anode foil for aluminum electrolytic capacitor according to claim 6, wherein the porous oxide film obtained from the first step has a thickness of 500 nm to 2000 nm, a pore diameter of 25 nm to 200 nm, and a pore pitch of 50 nm to 400 nm.

9. The method of manufacturing an anode foil for aluminum electrolytic capacitor according to claim 1, 2 or 3, wherein the electrolytic solution in the second step has a conductivity of 20 µS·cm to 1500 µS·cm.

10. The method of manufacturing an anode foil for aluminum electrolytic capacitor according to claim 8, wherein in the second step, the electrolytic solution has a conductivity of 20 µS·cm to 1000 µS·cm.
